# EUROPÄISCHE PATENTANMELDUNG

(11) **EP 2 312 235 A2**
(43) Veröffentlichungstag der Anmeldung: **20.04.2011**
(21) Anmeldenummer: 10013303.2
(22) Anmeldetag: 05.10.2010
(51) Int. Cl.: F24J 2/52, E04D 5/14

(54) **Flachdach-Fundament für Photovoltaik-Module**

(30) Priorität: 05.10.2009 DE 202009011109 U
(71) Anmelder: Menke, Bernold, 49733 Haren/Ems (DE)
(72) Erfinder: Menke, Bernold, 49733 Haren/Ems (DE)
(74) Vertreter: Habbel, Ludwig

(57) **Zusammenfassung**

Bei einem Flachdach, mit einer Tragschale aus Blech, und einer darüber angeordneten, als Folie oder Schweißbahn bezeichneten Dachhaut (6), schlägt die Erfindung vor, dass auf der Dachhaut (6) ein Fundament für die Aufständerung eines Photovoltaik-Moduls vorgesehen ist, wobei das Fundament eine Profilleiste (7) aufweist, die eine im wesentlichen ebene, auf die Dachhaut (6) aufsetzbare Bodenfläche aufweist, sowie eine Abdichtung (15), welche den Spalt überdeckt, welcher sich zwischen der Profilleiste und dem die Profilleiste umgebenden Bereich der Dachhaut ergibt.

## Beschreibung

Die Erfindung betrifft ein Flachdach nach dem Oberbegriff des Anspruchs 1 sowie eine Profilleiste eines derartigen Flachdachs.

Ein gattungsgemäßes Flachdach weist den klassischen Aufbau auf, zunächst auf einer Tragkonstruktion eine Tragschale aus Blech aufzuweisen. Auf dieser befindet sich üblicherweise eine Dampfsperre, auf der dann eine Isolierung beispielsweise aus PU-Schaum oder aus Mineralwolle vorgesehen ist, so dass die Dampfsperre eine Durchfeuchtung des Isoliermaterials von unten, aus dem von dem Flachdach abgeschlossenen Gebäude, verhindert. Oberhalb der Isolierung ist dann der eigentliche Witterungsschutz vorgesehen in Form einer Dachfolie, die umgangssprachlich auch als Schweißbahn bezeichnet wird.

Flachdächer eignen sich grundsätzlich hervorragend für die Aufstellung von Photovoltaik-Modulen, da sie letztlich ungenutzte Freiflächen darstellen, auf denen die Photovoltaik-Module zudem optimal zur Sonne hin ausgerichtet aufgestellt werden können. Problematisch ist allerdings die Aufstellung der Photovoltaik-Module: Zu Gunsten eines möglichst hohen Ertrags werden diese nicht flach auf die Flachdächer aufgelegt, sondern mittels einer so genannten Aufständerung schräg ausgerichtet. Beispielsweise in einem Winkel von etwa 45° zur Horizontalen. Um diese aufgeständerten Photovoltaik-Module gegen Windlasten zu sichern, müssen die Aufständerungen entsprechend große Haltekräfte aufnehmen können. Hierzu ist beispielsweise vorgesehen, so genannte Solarwannen zu verwenden, die mit Kies gefüllt werden können und durch ihr Gewicht die entsprechenden Haltekräfte bereitstellen. Alternativ dazu sind Aufständerungen mit Streben bekannt, bei denen die Streben durch schwere Platten, beispielsweise Gehwegplatten oder dergleichen, beschwert werden und auf diese Weise gegen abhebende Kräfte gesichert werden.

In beiden vorliegenden Fällen ist nachteilig, dass die Hallenkonstruktion mit dem zusätzlichen Gewicht der Aufständerung belastet wird, wobei die Flachdächer häufig für derartige Gewichtslasten statisch nicht berechnet und insbesondere nicht zugelassen sind.

Alternativ dazu kann vorgesehen sein, die Aufständerung der Photovoltaik-Module mit dem Flachdach zu verschrauben. Dabei besteht regelmäßig das Problem, dass die Photovoltaik-Module und die zugehörigen Aufständerungen ihrerseits ein ausreichend hohes Gewicht aufweisen, um in dem vergleichsweise weichen Dachaufbau Bodeneindrücke in der Dachfolie bzw. Schweißbahn zu hinterlassen. Dies bedeutet, dass an den Verschraubungsstellen sich Feuchtigkeit sammelt, so dass die verschraubten Aufständerungen in der Praxis häufig nicht dicht sind.

Der Erfindung liegt die Aufgabe zugrunde, eine Flachdachkonstruktion anzugeben, welche mit einem möglichst geringen Gewicht die Aufständerung von Photovoltaik-Modulen ermöglicht.

Diese Aufgabe wird durch ein Flachdach mit den Merkmalen des Anspruchs 1 und durch eine Profilleiste mit den Merkmalen des Anspruchs 10 gelöst.

Die Erfindung schlägt mit anderen Worten vor, auf der Dachhaut als Fundament für die Aufständerung eines Photovoltaik-Moduls eine Profilleiste vorzusehen, die beispielsweise nicht als Profilrohr mit kreisrundem Querschnitt ausgestaltet ist, sondern vielmehr eine im Wesentlichen ebene auf die Dachhaut aufsetzbare und somit die Gewichtslast des Photovoltaik-Moduls verteilende Bodenfläche aufweist. Dadurch, dass eine Profilleiste verwendet wird, also nicht einfach ein massiver Stab oder eine massive Strebe, jeweils mit Vollquerschnitt, wird eine möglichst leichtgewichtige Ausgestaltung dieses Fundaments für die Aufständerung ermöglicht.

Dabei kann die Profilleiste vorteilhaft aus Metall bestehen, so dass ein hohes Maß an Stabilität und Beständigkeit gegen Witterungseinflüsse beispielsweise im Vergleich zu Holzwerkstoffen gegeben ist. Korrodierende Werkstoffe wie z. B. Stahl können durch eine Beschichtung z. B. mit Zink oder durch eine Lackierung sehr gut witterungsbeständig ausgerüstet werden, oder die Profilleisten können von vornherein aus witterungsbeständigen Werkstoffen bestehen wie z. B. aus Aluminium.

Vorschlagsgemäß ist eine Abdichtung vorgesehen, welche den Spalt überdeckt, der sich zwischen der Profilleiste und dem umgebenden Bereich der Dachhaut ergibt. Diese Abdichtung kann erstens die Längskanten der Profilleiste vor Feuchtigkeit schützen. Wenn diese Abdichtung ringsum verlaufend erfolgt, kann zudem zweitens das Eindringen von Feuchtigkeit durch die Dachhaut verhindert werden, so dass eine vor Feuchtigkeit geschützte Verschraubung durch die Profilleiste hindurch erfolgen kann, um die Profilleiste an der Dachkonstruktion des Flachdaches festzulegen. Diese Verschraubungsstelle, in welcher die Schraube durch die Dachhaut dringt, ist durch die Abdichtung zuverlässig von Feuchtigkeit getrennt, da diese Abdichtung nicht nur an der Verschraubungsstelle selbst vorgesehen ist, sondern in dem gesamten Spalt zwischen Profilleiste und umgebender Dachhaut, so dass unterhalb der Profilleisten ein trockener, vor eindringender Feuchtigkeit geschützter Bereich vorgesehen ist, innerhalb dessen dann die Verschraubungsstelle liegt.

Vorteilhaft kann in an sich bekannter Weise bei der Konstruktion des Flachdachs vorgesehen sein, dass die Tragschale durch Trapezbleche gebildet ist.

Vorteilhaft kann die Profilleiste als Trapezblech ausgestaltet sein, beispielsweise als besonders schmale Profilleiste mit nur einer Hochsicke, wobei die beiden benachbarten Tiefsicken, die bei einem Trapezblech beiderseits einer Hochsicke vorgesehen sind, die Bodenfläche bilden können, mit welcher diese Profilleiste auf der Dachhaut aufsteht. Trapezbleche haben sich in den Dachkonstruktionen von Flachdächern hervorragend bewährt, weil sie bei äußerst geringem Eigengewicht eine hohe Steifigkeit und Stabilität für den Dachaufbau ermöglichen. Zudem kann durch unterschiedliche Breiten der Tiefsicken die Flächenpressung beeinflusst werden, mit welcher die Profilleiste auf der Dachhaut aufliegt, so dass in Anpassung an die vorgeschriebenen Belastungs-Höchstwerte Trapezbleche mit entsprechender Profilgeometrie verwendet werden können. Beispielsweise kann die maximal zulässige Flächenpressung von der jeweils vorliegenden Dachkonstruktion abhängen, z. B. von der für die Dachhaut verwendeten Folie oder von dem Isolierungsmaterial, welches zwischen der Dachhaut und der Tragschale des Dachs vorgesehen ist, und natürlich von dem Gewicht der auf dem Dach zu montierenden Photovoltaik-Anlage.

Die Verschraubung kann wie oben angedeutet, durch die Profilleiste hindurch erfolgen, beispielsweise durch die Hochsicke der als Trapezblech ausgestalteten Profilleiste, und sich bis durch die Tragschale des Flachdachs erstrecken, so dass eine sehr stabile Verankerung der Profilleisten ermöglicht wird und damit ein stabiles, hohe Kräfte aufnehmendes Fundament für die Befestigung der Aufständerung von Photovoltaik-Modulen bereitgestellt werden kann.

Wenn geringere Kräfte aufzunehmen sind, kann bereits eine Verschraubung der zu montierenden Gegenstände - wie der Photovoltaik-Module bzw. der dazu erforderlichen Ständer - nur mit der Profilleiste selbst ausreichend sein, also ohne dass diese Verschraubung sich bis in das Dach hinein erstreckt. In diesen Fällen ist die Profilleiste dann ihrerseits vorzugsweise anderweitig mit dem Dach verbunden, nämlich ebenfalls ohne Verschraubungen, so dass die Dachhaut unverletzt bleibt und somit deren optimale Dichtigkeit gewährleistet ist.

So kann beispielsweise die erwähnte Abdichtung, die an der Profilleiste vorgesehen ist, vorteilhaft aus einem mit der Dachhaut verschweißbaren Material bestehen. Dabei kann eine Kaltverschweißung durch zusätzliche Schweißmittel vorgesehen sein, wie bei einer Verklebung, oder es kann eine Heißverschweißung vorgesehen sein, ähnlich wie sie bei der Verlegung der Schweißbahnen angewendet wird. Durch die mit der Verschweißung einhergehende, innige Verbindung zwischen dem Abdichtungsmaterial und der Dachhaut wird eine zuverlässige Dichtigkeit des von der Abdichtung umgebenden Bereichs erzielt. Dies gilt beispielsweise für eine ringsum verlaufende Schweißnaht, welche eine die Dachhaut durchdringende Verschraubungsstelle umgibt und so zuverlässig vor dem Eindringen von Feuchtigkeit schützt. Zudem ergibt sich die Möglichkeit, bei einer ausreichend festen Schweißverbindung auf eine zusätzliche Verschraubung zu verzichten, so dass die Dachhaut nicht verletzt werden muss.

Eine Verschraubung mit der Profilleiste ist hinsichtlich des Feuchtigkeitsschutzes grundsätzlich unkritisch, da durch die Anpresskraft an der Verschraubungsstelle automatisch eine Abdichtung erfolgt. Zudem kann jedoch eine so genannte Kalotte dort auf der Profilleiste vorgesehen sein, wo die Verbindung mit dem übrigen Flachdach vorgesehen ist, beispielsweise die oben erwähnte Verschraubung. Die aus der Praxis an sich bekannten Kalotten dienen einerseits zur Lastverteilung und ermöglichen so die Übertragung hoher Haltekräfte, und zudem können die Kalotten in an sich bekannter Weise so ausgestaltet sein, dass sie eine hervorragende Dichtigkeit sicherstellen. So kann beispielsweise vorgesehen sein, die Kalotte in dem Bereich geringfügig aufzubördeln und einen den Schaft der Schraube umgebenden Kragen zu schaffen, so dass beim Festziehen der Schraube der Schraubenkopf auf den Bördelrand gepresst wird und eine zuverlässig feuchtigkeitsdichte Anlage des Schraubenkopfes an der Kalotte und somit an der Profilleiste sichergestellt werden kann.

Um eine zuverlässig dichte Anbindung der Profilleiste an die umgebende Dachhaut zu gewährleisten, kann die Profilleiste vorteilhaft als Verbundblech ausgestaltet sein, also als metallische Leiste, die mit einer Kunststoffbeschichtung versehen ist, wobei diese Kunststoffbeschichtung eine optimale Anbindung des Dichtungsmaterials an die Profilleiste ermöglicht. Somit kann beispielsweise eine Verklebung oder Verschweißung des Abdichtungsmaterials einerseits mit der Dachhaut erfolgen und andererseits mit der Kunststoffbeschichtung der als Verbundblech ausgestalteten Profilleiste.

Um eine Beschädigung der Dachhaut durch die aufliegende Profilleiste zuverlässig auszuschließen, kann vorteilhaft ein Scheuerschutz zwischen der Bodenfläche der Profilleiste und der Dachhaut vorgesehen sein. Ein derartiger Scheuerschutz kann beispielsweise als Vliesmaterial ausgestaltet sein, beispielsweise als schmales Band, welches nur dort angeordnet wird, wo die Profilleiste einen streifenartigen schmalen Kontakt mit der Dachhaut aufweist, oder dieses Vliesmaterial kann als demgegenüber etwas breitere Matte ausgestaltet sein, auf welche die Profilleiste komplett aufgesetzt wird. Bezogen auf eine als Trapezblech ausgestaltete Profilleiste kann beispielsweise vorgesehen sein, das Vliesmaterial als so breiten Streifen bzw. als so breite Matte auszugestalten, dass beide Tiefsicken, welche die Bodenfläche der Profilleiste bilden, auf dieser länglichen Matte aufstehen, und dass auch unterhalb der Hochsicke der Profilleiste dieses Vliesmaterial vorgesehen ist. Es kann für die Anbringung von Verschraubungen auf einfache Weise durchstoßen werden und stellt hierzu keinen größeren Montagewiderstand beim Einbringen der Verschraubungen dar.

Vorteilhaft kann eine besonders zuverlässige Abdichtung der Profilleiste dadurch bewirkt werden, dass die Abdichtung als Haube ausgestaltet ist, welche die Profilleiste umhüllt. Durch eine Serienfertigung derartiger Hauben kann eine besonders schnelle Montage der Profilleisten auf dem Flachdach ermöglicht werden, da entweder bereits werkseitig die Profilleisten mit derartigen Hauben ausgestattet werden können oder die Hauben bauseitig besonders schnell auf den Profilleisten angebracht und ringsum um die Profilleiste umlaufend mit der Dachhaut flüssigkeitsdicht verbunden werden können, beispielsweise verklebt oder verschweißt werden können. Eine derart haubenartige Abdichtung bewirkt zudem eine zusätzliche Abdichtungsmaßnahme in dem Bereich, in welchem die Profilleiste mit dem übrigen Flachdach verschraubt wird: Die oben erwähnte Kalotte wird dann beispielsweise auf die haubenartige Abdichtung auf der Profilleiste aufgesetzt, so dass nicht nur zwischen Befestigungsschraube und Kalotte, sondern auch zwischen der Kalotte und der Profilleiste eine Abdichtung geschaffen wird.

Die erwähnten Abdichtungshauben können beispielsweise in einem Tiefziehverfahren gefertigt werden, so dass größere Stückzahlen schnell und nahtlos herstellbar sind. Die Hauben können vorteilhaft aus demselben Werkstoff gefertigt werden, der auch die Dachhaut bildet, so dass eine optimal dichte Verbindung mit der Dachhaut aufgrund derselben Werkstoffe ermöglicht ist.

Eine besonders einfache Handhabung der Profilleiste kann dadurch ermöglicht werden, dass die Profilleisten werkseitig bereits fest mit einer Abdichtung versehen sind, die Abdichtung also fest mit der Profilleiste verbunden ist. Zudem kann auf diese Weise auch werkseitig eine zuverlässig dichte Verbindung der Abdichtung mit der Profilleiste sichergestellt werden, während bauseitig mit einfachen Mitteln die über die Profilleiste hinausragende Abdichtung mit der die Profilleiste umgebenden Dachhaut verbunden werden kann. Hierzu können beispielsweise Verbindungstechniken genutzt werden, wie sie den Dachdeckerbetrieben bekannt sind, welche die Dachhaut selbst verlegen.

Dabei kann insbesondere vorteilhaft vorgesehen sein, dass die Abdichtung aus dem gleichen Werkstoff wie die Dachhaut selbst besteht, so dass zur Verbindung der Abdichtung mit der Dachhaut genau dieselben Arbeitsschritte und Arbeitstechniken angewendet werden können, wie sie bei der dichten Verbindung benachbarter Schweißbahnen auf einem Flachdach angewendet werden.

Die vorschlagsgemäße Ausgestaltung eines Flachdachs kann nicht nur bei der Neukonstruktion eines Flachdaches vorgesehen werden, sondern eignet sich insbesondere auch problemlos zur Nachrüstung: Bei bestehenden Flachdächern können Profilleisten samt Abdichtung auf der vorhandenen Dachhaut befestigt werden. So können vorschlagsgemäß ausgestaltete Profilleisten beispielsweise darin bestehen, dass ein Trapezblechabschnitt mit einer Hochsicke und zwei daran anschließenden seitlichen Flachsicken als Profilleisten für die Fundamentierung einer Photovoltaik-Aufständerung dienen, wobei derartige Profilleisten insbesondere auch als Verbundbleche, also mit einer Kunststoffbeschichtung versehen, ausgestaltet sein können oder bereits mit einer Abdichtung versehen sind, die über den metallischen Teil der Profilleiste hinausragt und mit der Dachhaut verbunden werden kann, wobei diese Abdichtung ggf. als Haube ausgestaltet sein kann und den metallischen Anteil dieser Profilleiste umhüllen kann, also nach oben sowie umlaufend umgeben kann. Gegebenenfalls kann eine vorschlagsgemäß ausgestaltete Profilleiste auch bereits werkseitig mit dem die Bodenfläche nach unten abdeckenden Scheuerschutz versehen sein.

Ein Ausführungsbeispiel der Erfindung wird anhand der rein schematischen Darstellungen nachfolgend näher erläutert. Dabei zeigt
- Fig. 1: einen Querschnitt durch ein Flachdach, und
- Fig. 2: in gegenüber Fig. 1 größerem Maßstab einen Querschnitt durch eine Profilleiste samt Abdichtung.

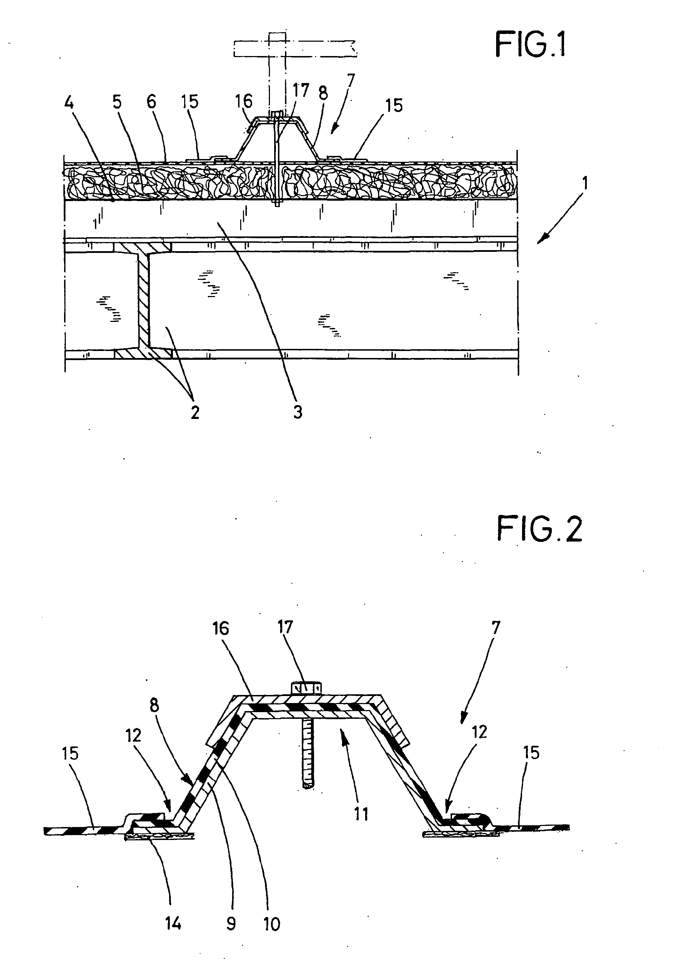

In Fig. 1 ist mit 1 insgesamt ein Flachdach bezeichnet, welches eine Tragkonstruktion aus TT-Profilen 2 aufweist. Auf dieser Tragkonstruktion 2 liegt eine metallische Tragschale 3 aus Trapezblechen auf, wobei die Sicken der Trapezbleche quer zur Blickrichtung in Fig. 1 verlaufen.

Auf der Tragschale 3 liegt eine Kunststofffolie als Dampfsperre 4 auf und darauf befindet sich eine Wärmedämmschicht 5, auf welcher dann die abschließende Dachhaut 6 in Form von so genannten Schweißfolien vorgesehen ist. Die einzelnen Bahnen der Schweißfolie sind in an sich bekannter Weise wasserdicht miteinander verbunden.

Auf der Dachhaut 6 befindet sich eine Profilleiste 7 als Fundament für die Aufständerung eines Photovoltaik-Moduls. Die Profilleiste 7 besteht, wie insbesondere aus Fig. 2 deutlicher ersichtlich ist, aus einem Trapez-Verbundblech 8, welches aus einem an sich bekannten metallischen Trapezblech 9 und einer darauf angebrachten Kunststoffbeschichtung 10 besteht. Dieses Trapez-Verbundblech 8 weist in an sich bekannter Weise eine Hochsicke 11 auf und zwei sich seitlich daran anschließende Tiefsicken 12, welche die Bodenfläche der Profilleiste 7 bilden, mit welcher die Profilleiste 7 auf der Dachhaut 6 aufruht. Dabei ist allerdings kein direkter Kontakt zwischen dem Trapez-Verbundblech 8 und der Dachhaut 6 vorgesehen, sondern ein Scheuerschutz 14 aus einem Vlies dient als Reibungsschutz und ist unterhalb der Bodenfläche, also unterhalb der Tiefsicken 12, vorgesehen.

Bei dem in Fig. 2 dargestellten Ausführungsbeispiel ist eine Abdichtung 15 in Form von Folienstreifen vorgesehen, die auf den beiden Tiefsicken 12 mit der Kunststoffbeschichtung 10 des Trapez-Verbundblechs 8 fest und flüssigkeitsdicht verbunden sind und die seitlich so weit über das Trapez-Verbundblech 8 hinausragen, dass sie in diesem überstehenden Bereich problemlos fest, dauerhaft und flüssigkeitsdicht mit der Dachhaut 6 verbunden werden können. Die Abdichtung 15 besteht bei dem dargestellten Ausführungsbeispiel aus demselben Material wie die Dachhaut 6 selbst, so dass dementsprechend eine problemlose Verbindung in der gewünschten Dauerhaftigkeit und Dichtheit mit der Dachhaut 6 erzielt werden kann.

Auf der Hochsicke 11 ist eine Kalotte 16 dargestellt, die als Abdichtungs- und Lastverteilungselement vorgesehen ist. Derartige Kalotten 16 sind nur an den Befestigungsstellen vorgesehen, wo die Profilleiste 7 mit der übrigen Dachkonstruktion des Flachdachs 1 verbunden ist, sie erstrecken sich also nicht als Längsprofile über die gesamte Länge der Profilleiste 7.

Bei dem dargestellten Ausführungsbeispiel ist eine Verschraubung der Profilleiste 7 mit dem übrigen Flachdach 1 vorgesehen, wobei eine entsprechende Schraube 17 sich durch die Kalotte 16, das Trapez-Verbundblech 8 und, wie aus Fig. 1 ersichtlich ist, durch die Tragschale 3 erstreckt.

An den beiden Stirnseiten der Profilleiste 7 ist ebenfalls eine aus dem entsprechenden Folienmaterial bestehende Abdichtung 15 vorgesehen, die in den dargestellten Zeichnungen nicht ersichtlich ist und die aus entsprechenden Folienstücken besteht, welche mit den beiden aus Fig. 2 ersichtlichen Längsstreifen der Abdichtung 15 durch Verklebung bzw. Verschweißung flüssigkeitsdicht verbunden ist.

Abweichend von dem dargestellten Ausführungsbeispiel kann vorgesehen sein, eine insgesamt haubenartige Abdichtung 15 zu schaffen, welche das gesamte Trapez-Verbundblech 8 von oben her umhüllt, also die komplette Oberseite des Trapez-Verbundbleches 8 abdeckt und sich auch um die offenen Stirnenden des Trapez-Verbundbleches 8 erstreckt, so dass eine zirkumferent geschlossene Abdichthaube geschaffen wird, die zirkumferent mit der die Profilleiste 7 umgebenden Dachhaut dicht verbunden werden kann. In einem derartigen Fall kann beispielsweise auch vorgesehen sein, das Trapezblech nicht als Trapez-Verbundblech auszugestalten, sondern demgegenüber preisgünstiger als rein metallisches Trapezblech, denn eine innige Verbindung mit der haubenartigen Abdichtung ist nicht erforderlich, da diese haubenartige Abdichtung ja in sich dicht ist und dementsprechend nur dicht an die Dachhaut 6 anschließen muss, jedoch nicht notwendigerweise dicht mit dem Trapezblech verbunden sein muss.

Gegenüber herkömmlichen Aufständerungen von Photovoltaik-Modulen kann das vorgeschlagene durch die Profilleisten gebildete Fundament nahezu gewichtsneutral montiert werden: Einerseits ist die zusätzliche Gewichtslast durch die Profilleisten 7 insbesondere dann nahezu vernachlässigbar gering, wenn die gewichtsoptimierten Profilleisten aus Trapezblech verwendet werden. Zudem weisen die herkömmlichen Aufständerungen häufig Bodenstreben auf, die einander kreuzen, also Längs- und Querstreben. Bei Verwendung der vorschlagsgemäßen Profilleisten können die Profilleisten entweder die Längsstreben oder die Querstreben dieser herkömmlichen Bodenkonstruktion der Aufständerung ersetzen, so dass das durch die Profilleisten und die Abdichtung bedingte Mehrgewicht entweder großteils oder sogar vollständig kompensiert werden kann.

Zudem ist bei der vorgeschlagenen Flachdachkonstruktion vorteilhaft, dass die einzelnen Arbeitsschritte ausschließlich von für das jeweilige Gewerk ausgebildetem Fachpersonal durchgeführt werden können: Die Montage der Profilleisten kann durch die Dachdecker erfolgen, die auch die Dachhaut des Flachdachs aufbringen. Die entsprechend dichte Verbindung der vorschlagsgemäß vorgesehenen Abdichtung mit der umgebenden Dachhaut kann mit den für dieses Gewerk typischen Materialien und Arbeitsabläufen erfolgen, so dass ein zuverlässig gutes Ergebnis sichergestellt werden kann.

Unabhängig von dieser Anbringung der Profilleisten kann zu einem beliebigen späteren Zeitpunkt das Personal arbeiten, welches die Photovoltaik-Module aufstellt. Es findet mit den bereits montierten Profilleisten ein hervorragendes Fundament vor, an dem sich die Aufständerung der Photovoltaik-Module problemlos und ohne Gefahr für die Dichtigkeit des Flachdaches befestigen lässt.

## Patentansprüche

1. Flachdach,
mit einer Tragschale aus Blech,
und einer darüber angeordneten, als Folie oder Schweißbahn bezeichneten Dachhaut,
**dadurch gekennzeichnet,**
**dass** auf der Dachhaut (6) ein Fundament für die Aufständerung eines Photovoltaik-Moduls vorgesehen ist, wobei das Fundament eine Profilleiste (7) aufweist, die eine im wesentlichen ebene, auf die Dachhaut (6) aufsetzbare Bodenfläche aufweist,
sowie eine Abdichtung (15), welche den Spalt überdeckt, welcher sich zwischen der Profilleiste (7) und dem die Profilleiste (7) umgebenden Bereich der Dachhaut (6) ergibt.

2. Flachdach nach Anspruch 1,
**dadurch gekennzeichnet,**
**dass** die Tragschale (3) durch Trapezbleche gebildet ist.

3. Flachdach nach Anspruch 1 oder 2,
**dadurch gekennzeichnet,**
**dass** die Profilleiste (7) mit wenigstens einer die Tragschale (3) durchsetzenden Schraube (17) am Flachdach (1) befestigt ist.

4. Flachdach nach einem der vorhergehenden Ansprüche,
**dadurch gekennzeichnet,**
**dass** die Abdichtung (15) aus einem mit der Dachhaut (6) verschweißbaren Material besteht.

5. Flachdach nach einem der vorhergehenden Ansprüche,
**dadurch gekennzeichnet,**
**dass** auf der Profilleiste (7) eine Kalotte (16) zumindest in dem Bereich vorgesehen ist, in welchem die Profilleiste (7) mit dem Flachdach (1) verbunden ist,
sowie in dem Bereich, in welchem die Aufständerung des Photovoltaik-Moduls an der Profilleiste (7) befestigt ist.

6. Flachdach nach einem der vorhergehenden Ansprüche,
**dadurch gekennzeichnet,**
**dass** zwischen der Bodenfläche und der Dachhaut (6) ein Scheuerschutz (14) angeordnet ist.

7. Flachdach nach Anspruch 6,
**dadurch gekennzeichnet,**
**dass** der Scheuerschutz (14) als Vlies ausgestaltet ist.

8. Flachdach nach einem der vorhergehenden Ansprüche,
**dadurch gekennzeichnet,**
**dass** die Abdichtung (15) als die Profilleiste (7) umhüllende Haube ausgestaltet ist.

9. Flachdach nach einem der vorhergehenden Ansprüche,
**dadurch gekennzeichnet,**
**dass** die Abdichtung (15) aus dem gleichen Werkstoff wie die Dachhaut (6) besteht.

10. Profilleiste (7) eines Flachdachs (1) nach einem der vorhergehenden Ansprüche, wobei die Profilleiste (7) eine im wesentlichen ebene, auf eine Dachhaut (6) eines Flachdachs (1) aufsetzbare Bodenfläche aufweist.

11. Profilleiste nach Anspruch 10,
**dadurch gekennzeichnet,**
**dass** die Profilleiste (7) ein Trapezblech (9) aufweist, mit wenigstens einer Hochsicke (11) und zwei sich beiderseits der Hochsicke (11 ) erstreckenden Tiefsicken (12), wobei die Tiefsicken (12) die Bodenfläche der Profilleiste (7) bilden.

12. Profilleiste nach Anspruch 10 oder 11,
**dadurch gekennzeichnet,**
**dass** die Profilleiste (7) ein Verbundblech aufweist, welches mit einer Kunststoffbeschichtung (10) versehen ist, die mit einer an die Dachhaut (6) anschließenden Abdichtung (15) langlebig und dicht verklebbar ist.

13. Profilleiste nach einem der Ansprüche 11 bis 12,
**dadurch gekennzeichnet,**
**dass** die Abdichtung (15) fest mit der Profilleiste (7) verbunden ist.

14. Profilleiste nach einem der Ansprüche 11 bis 12,
**dadurch gekennzeichnet,**
**dass** die Abdichtung (15) als die Profilleiste (7) umhüllende Haube ausgestaltet ist.
